# EUROPÄISCHE PATENTSCHRIFT

(11) **EP 2 788 169 B1**
(45) Veröffentlichungstag und Bekanntmachung des Hinweises auf die Patenterteilung: **31.01.2018**
(21) Anmeldenummer: 12823139.6
(22) Anmeldetag: 07.12.2012
(51) Int. Cl.: B29C 65/56, B29C 65/70, F16B 17/00

(54) **VERBINDUNGSANORDNUNG EINES FASERVERBUND-BAUTEILS MIT EINEM ZWEITEN BAUTEIL**
CONNECTING ARRANGEMENT FOR CONNECTING A FIBRE COMPOSITE COMPONENT TO A SECOND COMPONENT
STRUCTURE DE LIAISON D'UN ÉLÉMENT EN COMPOSITE RENFORCÉ DE FIBRES AVEC UN SECOND ÉLÉMENT

(30) Priorität: 07.12.2011 DE 102011120360
(43) Veröffentlichungstag der Anmeldung: 15.10.2014
(73) Patentinhaber: Leichtbau-Zentrum Sachsen GmbH, 01307 Dresden (DE)
(72) Erfinder: LEPPER, Martin, 01279 Dresden (DE); HUFENBACH, Werner, 01324 Dresden (DE); LADUSCH, Enrico, 01187 Dresden (DE); WERNER, Jens, 01640 Coswig (DE); KIESSLING, André, 01307 Dresden (DE)
(86) Internationale Anmeldenummer: PCT/DE2012/100372
(87) Internationale Veröffentlichungsnummer: WO 2013/083124

(56) Entgegenhaltungen:
- WO-A1-2005/054018
- WO-A2-2004/020912
- CH-A5- 644 411
- US-A1- 2004 197 534

## Beschreibung

Die Erfindung betrifft eine Verbindungsanordnung eines Faserverbund-Bauteils mit einem zweiten Bauteil.

Die Erfindung betrifft außerdem ein Verfahren zur Herstellung einer solchen Verbindungsanordnung.

Es ist bekannt, aus einem Faserverbundwerkstoff bestehende Faserverbund-Bauteile beliebiger Gestalt und Größe mit Bauteilen aus anderen Faserverbundwerkstoffen oder aus Nichtfaserverbund-Werkstoffen, wie z.B. aus Metall oder Kunststoff zu verbinden.

Bekanntermaßen wird die Verbindung von Faserverbund-Bauteilen mit Bauteilen aus anderen Faserverbundwerkstoffen oder Nichtfaserverbund-Werkstoffen, wie z.B. aus Kunststoff, Metall oder metallischen Strukturen, weitestgehend mit Hilfe von Klebungen, Schraub- oder Nietverbindungen oder durch Vernähen realisiert.Verbindung von Faserverbund-Bauteilen mit Bauteilen aus anderen Kunststoffen oder Faserverbundwerkstoffen werden zumeist geklebt.

Aus der Druckschrift DE 102 38 669 A1 ist ein dreidimensional geformtes Bauteil, bei dem ein erstes Bauelement aus einem metallischen Werkstoff mit einem Bauelement aus einem Faserverbundwerkstoff verbunden ist, bekannt. Nachteilig bei solchen Verbindungen unter Verwendung der Klebetechnik ist oft eine ungenügende und unzuverlässige Festigkeit der Verbindung. Auch stofflichen Verbindungen von beispielsweise duroplastischen Faserverbund-Bauteilen mit einem thermoplastischen Bauteil sind sehr schwierig herzustellen, wobei die erzielte Festigkeit meist nicht zufriedenstellend ist.

Wiederum sind Schraub- und Nietverbindungen dieser Bauteile aufwendig herzustellen. Insbesondere wird für die Herstellung dieser Schraub- und Nietverbindungen ein spezielles Verbindungselement benötigt, das einerseits in mindestens einem gesonderten Fertigungsprozess bereitzustellen und in einem weiteren Fertigungsschritt einzufügen ist, was den Herstellungsaufwand und die Herstellungskosten der Verbindungen stark bestimmt. Zudem sind diese Arten von Verbindungen meist masseintensiv, wobei dennoch eine Schwächung des Materials der Bauteile, insbesondere des Faserverbundmaterials des Faserverbund-Bauteils, zu beobachten ist.

Aus der Druckschrift US 2004/197534 A1 ist die Herstellung einer Verbundplatte aus drei Schichten bekannt, bei der die beiden äußeren, ggf. gewebe- oder faserhaltigen, thermoplastischen Schichten über Öffnungen in der mittleren Schicht durch Verflüssigung und Verschmelzung des Materials der äußeren Schichten miteinander verklebt bzw. verschweißt werden. Das Material der äußeren Schicht(en) wird aufgeschmolzen, fließt in die Öffnungen der mittleren Schicht und verklebt sich dort.

Ein ähnliches Verfahren ist aus der Druckschrift CH 644 411 A5 bekannt, bei dem ein doppellagiger, thermoplastischer Kunststoffstreifen aus gewebeverstärktem PVC durch Hochfrequenz-Verschweißen an eine Segeltuch-Materialbahn angefügt wird, wobei durch das geschmolzene Material des Kunststoffstreifens, die Löcher eine Loch-Perforation der Segeltuch-Materialbahn ausfüllend, ein Rand der Segeltuch-Materialbahn vulkanisiert wird.

Bei einem weiteren bekannten Verfahren nach der Druckschrift WO 2004/020912 A2 werden zwei thermoplastische Kunststoffplatten mit ggf. zugemischten Fasern und eine zwischenliegende metallische Senklochplatte mittels eines thermoplastischen Heißpressverfahrens durch Einschmelzen des Kunststoffmaterials in die Senklöcher der Senklochmetallplatte verbunden, wodurch eine allseits verschmolzene Kunststoffschicht um die Senklochplatte gebildet wird.

Derartige stoffliche Verbindungen durch Aufschmelzen des Faserverbundmaterials der zu verbindenden Teile bedürfen zu ihrer Herstellung eines hohen konstruktiven und energetischen Aufwandes. Die thermische Belastung kann außerdem zu ungünstigen Gefüge-Veränderungen im Faserverbundmaterial führen, welche die Festigkeit und Sicherheit der Verbindung unkontrolliert mindern können.

Aus der Druckschrift DE 196 08 127 A1 ist ein Verfahren zur Herstellung eines dreidimensional geformten Faserverbund-Bauteils bekannt, bei dem Faserlagen im formlosen Zustand mit örtlichen Verstärkungsteilen, wie metallischen Befestigungselementen, zu einem planaren, integralen Faserhalbzeug vernäht werden und anschließend das Faserhalbzeug in einem Formwerkzeug unter Druck- und Wärmeinwirkung in die dreidimensionale Bauteilgeometrie geformt und konsolidiert wird.

Nachteilig bei den Verbindungen von Faserhalbzeugen durch Vernähen ist, dass für diesen Arbeitsschritt eine gesonderte Anlage benötigt wird und der Nähprozess sehr aufwendig ist. Mit dem Nähfaden wird ein zusätzlicher Werkstoff eingebracht, der die Qualität der Verbindung unkontrolliert beeinflussen kann.

Mögliche Fehlstellen der Naht können eine Gefahr für die Sicherheit der Verbindung bilden.

Der Erfindung liegt daher die Aufgabe zugrunde, eine aufwandsarme, kostengünstige und hochfeste Verbindung zwischen einem Bauteil aus Faserverbundwerkstoff und einem zweiten Bauteil aus einem anderen Faserverbundwerkstoff oder einem Nichtfaserverbundwerkstoff zu schaffen und ein entsprechendes kostengünstiges Verfahren zur Herstellung einer solchen Verbindung bereitzustellen.

Die Aufgabe wird erfindungsgemäß durch eine Verbindungsanordnung mit den Merkmalen des Patentanspruches 1 gelöst, wonach das - aus einem anderen Werkstoff als das Faserverbund-Bauteil bestehende - zweite Bauteil zumindest einen flächigen Abschnitt mit einer oder mehreren den flächigen Abschnitt durchdringenden Aussparung(en) aufweist und dieser flächige Abschnitt zwischen wenigstens zwei Teilschichten des Faserverbund-Bauteils angeordnet ist, wobei zumindest eine der Teilschichten in die Aussparung(en) eingeformt ausgebildet ist.

Bei dieser Lösung ist ein Formschluss des Faserverbund-Bauteils mit dem zweiten Bauteil erzeugt, wobei der Formschluss durch Hinterschneidung(en) zumindest einer der beiden, am zweiten Bauteil flächig anliegenden Teilschicht des Faserverbund-Bauteils im Bereich der Aussparung(en) des zweiten Bauteils gebildet ist. Die Prägung(en) bzw. Hinterscheidung(en) der anliegenden Teilschicht und der Verbund beider Teilschichten des Faserverbund-Bauteils ergeben bei einem fertiggestellten, ausgehärteten Faserverbund-Bauteil einen sicheren und festen Halt der gebildeten Verbindung.

Die erfindungsgemäße Ausführung sieht wahlweise auch die Hinterschneidung(en) beider, am zweiten Bauteil beidseitig flächig anliegenden Teilschichten des Faserverbund-Bauteils im Bereich der Aussparung(en) des zweiten Bauteils vor. Insofern ist ein doppelseitiger Formschluss des Faserverbund-Bauteils mit dem zweiten Bauteil gebildet.

Die formschlüssige Verbindung der flächigen Abschnitte dieser Bauteile verbessert die Verbindungsqualität der Bauteile erheblich, ohne dass zusätzlich spezielle Verbindungselemente oder zusätzliche Klebstoffe erforderlich sind.

Die Aufgabe wird erfindungsgemäß durch ein Verfahren zur Herstellung dieser Verbindungsanordnung mit den Merkmalen des Patentanspruches 9 gelöst.

Erfindungsgemäß wird bei dem Verfahren nach dem Patentanspruch 9 vorgeschlagen, dass
- der flächige Abschnitt des zweiten Bauteils zwischen wenigstens zwei Teilschichten einer Preform des Faserverbund-Bauteils positioniert wird, so dass
- die Teilschichten eben am flächigen Abschnitt des zweiten Bauteils anliegen,
- wobei wenigstens eine Teilschicht eine oder mehrere den flächigen Abschnitt des zweiten Bauteils durchdringende Aussparung(en) abdeckt und flächig überlappt,
- anschließend wenigstens eine Teilschicht mittels eines Formwerkzeuges in die Aussparung(en) eingeformt wird, so dass sich die Preform des Faserverbund-Bauteils mit dem zweiten Bauteil formschlüssig verbindet, und
- vor oder nach dem Entformen der gefügten Verbindungsanordnung die Preform des Faserverbund-Bauteils konsolidiert wird.

Die formschlüssige, vorzugsweise zusätzlich stoffschlüssige Verbindung zwischen dem Faserverbund-Bauteil mit mindestens zwei Teilschichten und dem zweiten Bauteil wird durch die Umschließung des flächigen Abschnitts des zweiten Bauteils durch die obere und untere Teilschicht des Faserverbund-Bauteils realisiert. Die formschlüssige Verbindung entsteht zwischen der oberen und unteren Teilschicht im Bereich der Aussparung(en) des zweiten Bauteils.

Während des Formprozesses mindestens einer Teilschicht der Preform des Faserverbund-Bauteils wird die formschlüssige Verbindung, in Form von Prägungen der Teilschicht(en), die mittels eines Formwerkzeuges in die Aussparung(en) des in das zugleich in das Formwerkzeug eingelegte, zweiten Bauteils eingeformt werden, hergestellt.

Die Verbindung wird gleichzeitig mit der Formgebung des Faserverbund-Bauteils erzeugt, was die notwendigen Verfahrensschritte zur Herstellung der Verbindungsanordnung minimiert.

In einem Verfahrensschritt erfolgt die Formung des Faserverbund-Bauteils und Verbindung mit dem zweiten Bauteil, wobei ein Hinterschnitt in der Übergangszone zwischen der Prägung der Teilschicht(en) und dem zweiten Bauteil entsteht. Vorzugsweise erfolgt das Formen der Teilschichten des Faserverbund-Bauteils unter Beisein oder Zugabe vom Matrixmaterial, so dass während des Formens überschüssiges Matrixmaterial die noch verbleibenden Hohlräume der Hinterschnittverbindung füllt. Das überschüssige Matrixmaterial dient als Füllmaterial und trägt im festen Zustand zusätzlich zur Festigkeit der Verbindungsanordnung bei.

Bei der Konsolidierung der mit dem zweiten Bauteil verbundenen Preform des Faserverbund-Bauteils, nämlich beim Aushärten bzw. Verfestigen des Faserverbundmaterials, wird das Matrixmaterial in einen festen Zustand überführt und zugleich die Prägungen der zwei Teilschichten im Bereich der Aussparung(en) formenfest fixiert und vorzugsweise in einer gemeinsamen Kontaktzone miteinander verklebt. Bei der Konsolidierung unter Beisein oder Zugabe vom Matrixmaterial kann außerdem jeweils eine der beiden Teilschichten zumindest im flächigen Randbereich um die Aussparung mit dem zweiten Bauteil verklebt werden.

Das erfindungsgemäße Verfahren reduziert die Hilfsmaterialien und die notwendigen Arbeitsschritte zur Herstellung der Verbindungsanordnung, da infolge der geschaffenen Form- und ggf. Stoffschlüssigkeit kein zusätzliches Bohren, Nieten oder Nähen nötig ist. Trotz der Einsparung von speziellen Verbindungselementen und der entsprechenden Arbeitsschritte wird mit dem Verfahren eine vorteilhafte hochfeste Verbindung zwischen den Bauteilen erzielt.

Vorzugsweise wird bereits im Preform-Stadium eine eigenstabile, formschlüssige Verbindungsanordnung geschaffen, die noch vor dem Konsolidieren, aus dem Formwerkzeug entnommen werden kann. Damit wird die Fertigungsdauer im Formwerkzeug verringert, wodurch die Ausnutzungsrate des Formwerkzeuges erhöht werden kann.

Nach vorteilhaften Weiterbildungen des erfindungsgemäßen Verfahrens kann die hochfeste Verbindung der Verbindungsanordnung zwischen dem Faserverbund-Bauteil und dem zweiten Bauteil mit Hilfe von zwei Teilwerkzeugen realisiert werden. Eine oder beide Werkzeugflächen zum Einformen der Teilschicht(en)können formstabil oder formlabil ausgebildet sein. Auch die Form der Prägung in den Teilschicht(en) kann mit Hilfe verschiedener Gestaltungen des Formwerkzeuges bzw. der Teilwerkzeuge bestimmt werden.

Weitere vorteilhafte Ausgestaltungen und Weiterbildungen der erfindungsgemäßen Verbindungsanordnung und des erfindungsgemäßen Herstellungsverfahrens einer Verbindungsanordnung gehen aus den abhängigen Patentansprüchen 2 bis 8 bzw. 10 bis 15 sowie der nachfolgenden Beschreibung und den zugehörigen Zeichnungen hervor.

Die erfindungsgemäße Verbindungsanordnung und das erfindungsgemäße Verfahren zu deren Herstellung werden nachfolgend an Ausführungsbeispielen näher erläutert. Die zugehörigen Zeichnungen zeigen in stilisierter Darstellung in
- Fig. 1a: eine Schnittansicht einer Verbindunganordnung eines Faserverbund-Bauteils mit zwei Teilschichten mit einem flächigen Abschnitt eines metallischen Bauteils,
- Fig. 1b: eine Schnittansicht einer Verbindunganordnung eines Faserverbund-Bauteils mit zwei Teilschichten mit einem flächigen Abschnitt eines metallischen Bauteils nach einem zweiten Ausführungsbeispiel,
- Fig. 2a: eine Draufsicht auf eine Verbindungsanordnung eines Faserverbund-Bauteils mit zwei Teilschichten mit einem flächigen Abschnitt eines metallischen Bauteils nach einem dritten Ausführungsbeispiel,
- Fig. 2b: eine Schnittansicht der Verbindungsanordnung nach Fig. 2a,
- Fig. 2c: eine Schnittansicht der Verbindungsanordnung nach Fig. 2a in einer zweiten Ausführungsvariante mit vier Teilschichten,
- Fig. 2d: eine Schnittansicht der Verbindungsanordnung nach Fig. 2a in einer dritten Ausführungsvariante mit vier Teilschichten und einer Zwischenschicht,
- Fig. 3a: eine Draufsicht auf eine Verbindunganordnung eines Faserverbund-Bauteils mit zwei Teilschichten mit einem flächigen Abschnitt eines metallischen Bauteils nach einem vierten Ausführungsbeispiel,
- Fig. 3b: eine Schnittansicht der Verbindungsanordnung nach Fig. 3a,
- Fig. 3c: eine Draufsicht auf die Verbindungsanordnung nach Fig. 3a in einer zweiten Ausführungsvariante,
- Fig. 3d: eine Schnittansicht der Verbindungsanordnung nach Fig. 3c,
- Fig. 4a: eine Schnittansicht eines zweitteiligen Formwerkzeuges mit einer Preform des Faserverbund-Bauteils und einem zweiten Bauteil in einer ersten Fertigungsphase zur Fertigung der Verbindungsanordnung nach Fig. 1a,
- Fig. 4b: Verfahrensanordnung nach Fig. 4a in einer zweiten Fertigungsphase,
- Fig. 4c: Verfahrensanordnung nach Fig. 4a in einer dritten Fertigungsphase,
- Fig. 4d: Verfahrensanordnung nach Fig. 4a in einer vierten Fertigungsphase,
- Fig. 5a: eine Schnittansicht eines zweitteiligen, formlabilen Formwerkzeuges mit einer Preform des FaserverbundBauteils und einem zweiten Bauteil in einer ersten Fertigungsphase zur Fertigung der Verbindungsanordnung nach Fig. 1b,
- Fig. 5b: Verfahrensanordnung nach Fig. 5a in einer zweiten Fertigungsphase,
- Fig. 5c: Verfahrensanordnung nach Fig. 5a in einer dritten Fertigungsphase,
- Fig. 5d: Verfahrensanordnung nach Fig. 5a in einer vierten Fertigungsphase,
- Fig. 6: eine Schnittansicht eines zweitteiligen Formwerkzeuges mit einer Preform des Faserverbund-Bauteils und einem zweiten Bauteil in einer Verfahrensanordnung zur Fertigung der Verbindungsanordnung nach Fig. 1b,
- Fig. 7a: eine Schnittansicht einer Fertigungsanlage zur kontinuierlich getakteten Inline-Fertigung einer Verbindungsanordnung nach Fig. 2a mit mehreren Prägungen nach Fig. 1b,
- Fig. 7b: Fertigungsanlage nach Fig. 7a in einer zweiten Fertigungsphase und
- Fig. 7c: Fertigungsanlage nach Fig. 7a in einer dritten Fertigungsphase.

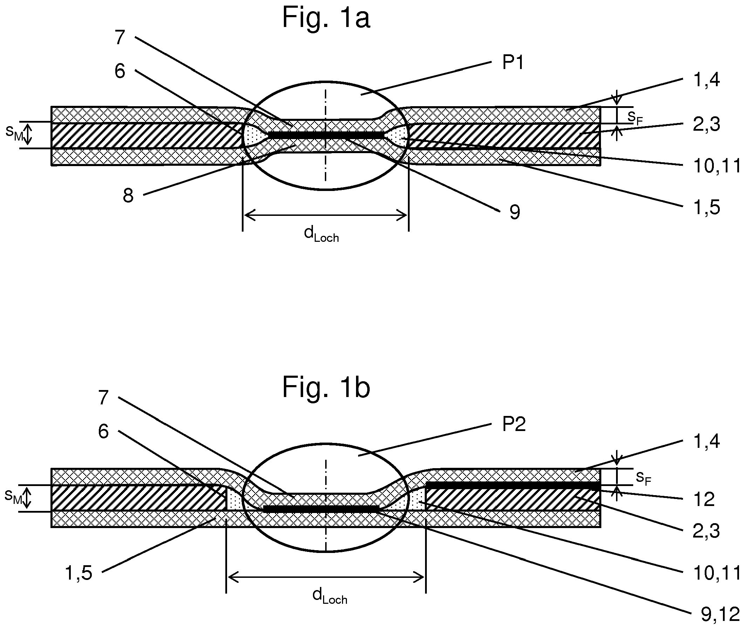

Fig. 1a zeigt eine erfindungsgemäße Verbindunganordnung eines Faserverbund-Bauteils 1 mit einem metallischen Bauteil 2, dessen flächiger Abschnitt 3 zwischen zwei Teilschichten 4, 5 des Faserverbund-Bauteils 1 angeordnet ist. Faserverbund-Bauteil 1 und metallisches Bauteil 2 sind jeweils nur auszugsweise dargestellt. Sie können beliebig, dreidimensional geformte Bauteile, z.B. Bauteile einer Fahrzeugkarosserie, sein, die nach diesem Ausführungsbeispiel erfindungsgemäß zusammengefügt sind.

Der flächige Abschnitt 3 des metallischen Bauteils 2 hat eine, das Bauteil 2 durchdringende Aussparung 6 in Form eines Loches 6 mit rundem Lochquerschnitt. Der Lochdurchmesser d_{Loch} der Aussparung 6 ist im Ausführungsbeispiel deutlich größer als die Dicke S_{M} des flächigen Abschnitts 3 des metallischen Bauteils 2. Die obere und untere Teilschicht 4, 5 aus Faserverbundmaterial liegt jeweils an einer Oberseite und einer Unterseite des flächigen Abschnitts 3 des metallischen Bauteils 2 an. Die obere wie auch die untere Teilschicht 4, 5 des Faserverbund-Bauteils 1 sind in die Aussparung 6 eingeformt ausgebildet und weisen je eine zur Form der Aussparung 6 korrespondierende Prägung 7, 8 mit rundem Querschnitt auf. Die Form der Prägungen 7, 8 der oberen und unteren Teilschicht 4, 5 wird darüber hinaus von der Dicke S_{M} des flächigen Abschnitts 3 des metallischen Bauteils 2 und der Schichtdicke S_{F} der Teilschichten 4, 5 des Faserverbund-Bauteils 1 bestimmt.

Die Prägungen 7, 8 der Teilschichten 4, 5 ergeben im Bereich der Aussparung 6 einen Hinterschnitt. Die Teilschichten 4, 5 des Faserverbund-Bauteils 1 sind als Endprodukt sehr stabil und formfest, so dass eine formschlüssige Verbindung zwischen dem Faserverbund-Bauteil 1 und dem metallischen Bauteil 2 bewirkt ist. Im Ausführungsbeispiel erstrecken sich die Prägungen 7, 8 der Teilschichten 4, 5 soweit in die Aussparung 6, dass sie eine gemeinsame Kontaktzone 9 bilden und damit die Aussparung 6 vollständig umschließen.

Die Prägungen 7, 8 der oberen und der unteren Teilschicht 4, 5 sind zudem jeweils gleichartig ausgebildet und erstrecken sich in etwa gleich tief, so dass sie eine spiegelsymmetrische Anordnung und Gestalt in der Aussparung 6 ergeben.

Die Verbindungsanordnung nach Fig. 1a ist demnach mit einer symmetrischen Prägeform P1 der Teilschichten 4, 5 des Faserverbund-Bauteils 1 ausgestattet.

Ein ringförmiger Hohlraum 10, der sich im Randbereich zwischen den Prägungen 7, 8 der oberen und unteren Teilschicht 4, 5 und der Aussparung 6 ergibt, ist mit Füllmaterial 11, insbesondere mit überschüssigem Matrixmaterial oder einem anderen Klebstoff, ausgefüllt. Im verfestigten Zustand des Füllmaterials 11 sind die Teilschichten 4, 5 des Faserverbund-Bauteils 1 miteinander und mit dem metallischen Bauteil 2 verklebt. Damit ist zusätzlich zur formschlüssigen Verbindung eine stoffschlüssige Verbindung zwischen dem Faserverbund-Bauteil 1 und dem metallischen Bauteil 2 vorhanden. Das verfestigte Füllmaterial 11 im ringförmigen Hohlraum 10 erhöht zudem die Stabilität der Prägungen 7, 8 der oberen und unteren Teilschicht 4, 5 im Bereich der Aussparung 6 und unterstützt somit die formschlüssige Verbindung. Das verfestigte Füllmaterial 11 trägt somit mehrfach vorteilhaft zur Festigkeit der Verbindungsanordnung bei.

Fig. 1b zeigt eine zur Verbindunganordnung nach Fig. 1a alternative Verbindunganordnung eines Faserverbund-Bauteils 1 mit einem metallischen Bauteil 2 nach einem zweiten Ausführungsbeispiel. Zur Vermeidung von Wiederholungen sollen nachfolgend nur die sich gegenüber der Verbindunganordnung nach Fig. 1a unterscheidenden Merkmale und Bauteile beschrieben werden. Gleiche Bauteile mit gleicher Funktion haben gleiche Bezugszeichen.

Im Unterschied zur Verbindunganordnung nach Fig. 1a ist bei der Verbindungsanordnung nach dem zweiten Ausführungsbeispiel nur in der oberen Teilschicht 4 des Faserverbund-Bauteils 1 eine in die Aussparung 6 des metallischen Bauteils 2 eingeformte Prägung 7 ausgebildet. Die unter Teilschicht 5 ist vollständig - auch im Bereich der Aussparung 6 - planar ausgebildet und weist keine Prägung auf. Die Prägung 7 der oberen Teilschicht 4 erstreckt sich soweit in die Aussparung 6, dass beide Teilschichten 4, 5 dennoch eine gemeinsame Kontaktzone 9 bilden und die Aussparung 6 vollständig umschließen. Die Tiefe der Prägung 7 der oberen Teilschicht 4 entspricht in etwa der Dicke S_{M} des flächigen Abschnitts 3 des metallischen Bauteils 2.

Die Verbindungsanordnung nach Fig. 1b ist damit durch eine asymmetrische Prägeform P2 der Teilschichten 4, 5 des Faserverbund-Bauteils 1 gekennzeichnet.

Die ausschließliche Ausführung der Prägung in nur einer Teilschicht - im Ausführungsbeispiel in der oberen Teilschicht 4 - verringert den Vorbehandlungsaufwand bezüglich der Formung der gegengelagerten, hier unteren Teilschicht 5.

Die untere Teilschicht 5 muss außerdem nicht derart formbar ausgebildet sein, wie die obere Teilschicht 4, die eine Formbarkeit aufweist, um die gesamte Prägetiefe zu erzielen.

Die Verbindungsanordnung nach Fig. 1b verfügt außerdem über eine erweiterte stoffschlüssige Verbindung zwischen dem Faserverbund-Bauteil 1 und dem metallischen Bauteil 2.

Die Teilschichten 4, 5 sind zum einen zusätzlich in der Kontaktzone 9 mittels überschüssigen Matrixmaterials oder eines anderen Klebstoffs miteinander verbunden. Zum anderen ist in einem Randbereich um die Aussparung 6 eine Klebefläche 12 auf der Oberseite des flächigen Abschnitts 3 des metallischen Bauteils 2 ausgebildet, an der die obere Teilschicht 4 des Faserverbund-Bauteils 1 zusätzlich mit dem metallischen Bauteil 2 stofflich verbunden ist.

Die erweiterte stoffschlüssige Verbindung erhöht die Festigkeit der Verbindungsanordnung um ein Weiteres.

Alternativ ist eine vorteilhafte, nicht dargestellte Verbindungsanordnung mit einer asymmetrischen Prägeform der Teilschichten 4, 5 des Faserverbund-Bauteils 1 vorgesehen, bei der die obere und untere Teilschicht 4, 5 zueinander ungleichartige, insbesondere unterschiedlich tief erstreckte Prägungen 7, 8 aufweisen.

Diese Verbindungsanordnung kann unter Verwendung einer oberen und unteren Teilschicht 4, 5, die aus verschiedenen formbaren, textilen Halbzeugen bestehen, gebildet werden.

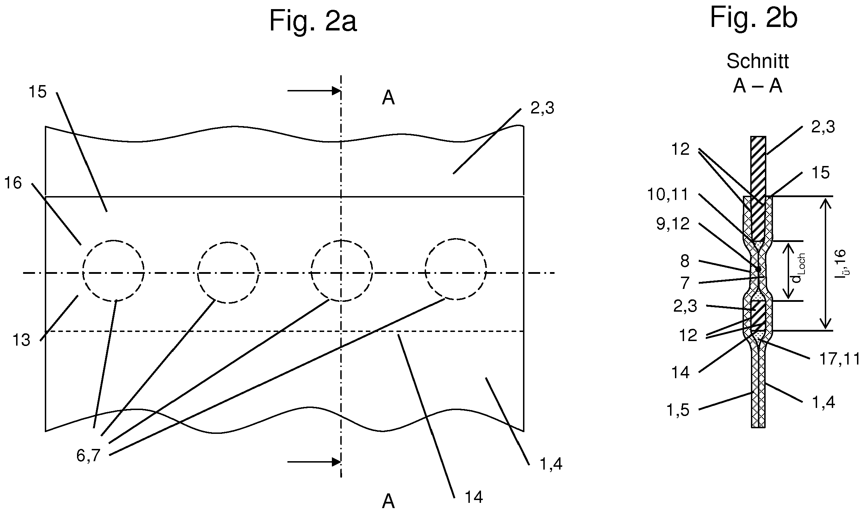

In einem dritten Ausführungsbeispiel nach Fig. 2a bis 2d ist eine weitere alternative Verbindunganordnung zur Verbindunganordnung eines Faserverbund-Bauteils 1 mit einem metallischen Bauteil 2 nach Fig. 1a dargestellt. Zur Vermeidung von Wiederholungen sollen nachfolgend nur die sich gegenüber der Verbindunganordnung nach Fig. 1a unterscheidenden Merkmale und Bauteile beschrieben werden. Gleiche Bauteile mit gleicher Funktion haben gleiche Bezugszeichen.

Die Verbindunganordnung nach Fig. 2a bis 2d weist ein metallisches Bauteil 2 auf, welches in einem flächigem Randbereich mehrere entlang einer Mittellinie 13 und zueinander gleichmäßig beabstandet angeordnete, runde Aussparungen 6 aufweist, wie aus der Draufsicht nach Fig. 2a ersichtlich ist. Die Mittellinie 13 der Aussparungen 6 verläuft im Ausführungsbeispiel parallel zu einer geraden Bauteilkante 14 des metallischen Bauteils 2.

Auch das Faserverbund-Bauteil 1 weist eine gerade Bauteilkante 15 auf, die im Ausführungsbeispiel parallel zur Bauteilkante 14 des metallischen Bauteils 2 verläuft.

Zwischen der Bauteilkante 15 des Faserverbund-Bauteils 1 und der Bauteilkante 14 des metallischen Bauteils 2 ist ein bandförmiger Überlappungsbereich 16 mit einer Bandbreite l_{Ü} gebildet, in dem der flächige Randbereich des metallischen Bauteils 2 beidseitig von der oberen und der unteren Teilschicht 4, 5 des Faserverbund-Bauteils 1 abgedeckt ist (Siehe Fig. 2a und Fig. 2b).

Die obere und die untere Teilschicht 4, 5 des Faserverbund-Bauteils 1 weisen jeweils mehrere zur Anzahl, Ausrichtung und Form der Aussparungen 6 korrespondierende Prägungen 7, 8 auf. Die Prägungen 7, 8 der oberen und unteren Teilschicht 4, 5 erstrecken sich jeweils in etwa gleich tief in die Aussparungen 6, so dass sie eine zueinander spiegelsymmetrische Prägeform P1 der Teilschichten 4, 5 in den Aussparungen 6 bilden. Die Vielzahl der gleichmäßig beabstandeten, miteinander korrespondierenden Aussparungen 6 und Prägungen 7, 8 erhöht die Qualität der formschlüssigen Verbindung zwischen dem Faserverbund-Bauteil 1 und dem metallischen Bauteil 2 wesentlich.

Im Überlappungsbereich 16 ist auf der Oberseite und die Unterseite des flächigen Abschnitts 3 des metallischen Bauteils 2 jeweils eine Klebefläche 12 zur stofflichen Verbindung des metallischen Bauteils 2 mit der oberen und/oder unteren Teilschicht 4, 5 des Faserverbund-Bauteils 1 zur Verfügung gestellt. Der bandförmige Überlappungsbereich 16 erstreckt sich mit einer solchen Bandbreite l_{Ü}, dass eine ausreichend große Klebefläche 12 für den Stoffschluss gewährleistet ist. Als besonders vorteilhaft hat sich eine Bandbreite l_{Ü} des Überlappungsbereiches 16 erwiesen, die größer als das 2-fache des d_{Loch} Lochdurchmessers ist (l_{Ü} > 2 x d_{Loch}).

Die obere und die untere Teilschicht 4, 5 des Faserverbund-Bauteils 1 sind zusätzlich sowohl im Bereich aller Aussparungen 6 als auch jenseits der Bauteilkante 14 des metallischen Bauteils 2 miteinander stofflich verbunden (vgl. Fig. 2b).

In den ringförmigen Hohlräumen 10 der Aussparungen 6 wie auch in einem längserstreckten Hohlraum 17, der sich im Randbereich zwischen der Bauteilkante 14 des metallischen Bauteils 2 und der oberen und unteren Teilschicht 4, 5 ergibt, ist mit Füllmaterial 11 entsprechend der Beschreibung nach Fig. 1a ausgefüllt. Im verfestigten Zustand des Füllmaterials 11 sind die Teilschichten 4, 5 des Faserverbund-Bauteils 1 mehrfach miteinander und mit dem metallischen Bauteil 2 verklebt.

Mit dieser Ausführung ist eine hochfeste form- und stoffschlüssige Verbindungsanordnung realisiert.

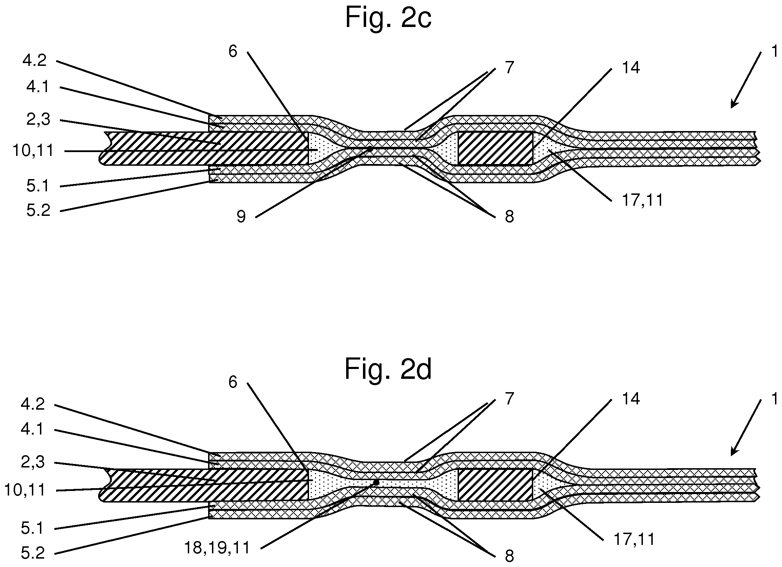

Fig. 2c zeigt eine Schnittansicht der Verbindungsanordnung nach Fig. 2a in einer Ausführungsvariante, bei der das Faserverbund-Bauteil 1 zwei obere Teilschichten 4.1, 4.2 und zwei untere Teilschichten 5.1, 5.2, insgesamt also vier Teilschichten aufweist. Dabei sind die beiden oberen Teilschichten 4.1, 4.2 bzw. die beiden unteren Teilschichten 5.1, 5.2, jeweils unmittelbar miteinander formschlüssig und stofflich verbunden und die dem metallischen Bauteil 2 zugewandte, obere Teilschicht 4.1 und die dem metallischen Bauteil 2 zugewandte, untere Teilschicht 5.1 miteinander und mit dem metallischen Bauteil 2 formschlüssig und stofflich verbunden. Diese Teilschichten 4.1, 5.1 bilden die Kontaktzone 9. Die jeweils äußere, obere Teilschicht 4.2 und äußere, untere Teilschicht 5.2 ist demnach mittelbar mit dem metallischen Bauteil 2 verbunden. Die zweischichtige Ausführung der oberen und unteren Teilschichten 4.1, 4.2, 5.1, 5.2 steigert die Stabilität der formschlüssigen Verbindung und die Intensität der stoffschlüssigen Verbindung zwischen dem Faserverbund-Bauteil 1 und dem metallischen Bauteil 2.

Fig. 2d zeigt eine Schnittansicht der Verbindungsanordnung nach Fig. 2a in einer zweiten Ausführungsvariante, die ähnlich der Ausführung nach Fig. 2c gestaltet ist. Diese Verbindungsanordnung weist ebenfalls zwei obere und zwei untere Teilschichten 4.1, 4.2, 5.1, 5.2. Bezüglich der übereinstimmenden Merkmale wird daher auf die Beschreibung zur Fig. 2c verwiesen.

Im Unterschied zur Ausführung nach Fig. 2c sind die jeweils dem metallischen Bauteil 2 zugewandten, oberen und unteren Teilschichten 4.1, 5.1 im Bereich der Aussparungen 6 nicht unmittelbar miteinander verbunden, sondern weisen einen Abstand zueinander auf. Ein verbleibender flächiger Hohlraum 18 zwischen den zueinander beabstandeten Teilschichten 4.1, 5.1 ist mit Füllmaterial 11 entsprechend der Beschreibung nach Fig. 1a gefüllt und bildet eine Zwischenschicht 19. In dieser Weise sind die zugewandte obere und untere Teilschicht 4.1, 5.1 im Bereich der Aussparungen 6 mittelbar, nämlich mittels der Zwischenschicht 19 aus Matrixwerkstoff, stofflich verbunden.

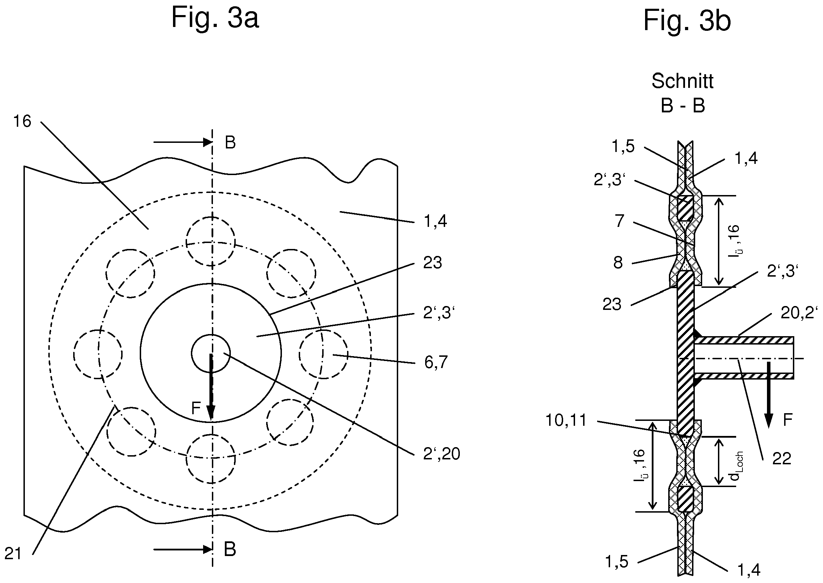

Die Figuren 3a bis 3d geben eine erfindungsgemäße Verbindunganordnung eines Faserverbund-Bauteils 1 mit einem kreisscheibenförmigen, rotationssymmetrischen Abschnitt 3' eines metallischen Bauteils 2' nach einem vierten Ausführungsbeispiel wieder. Das vierte Ausführungsbeispiel betrifft eine spezielle Ausgestaltung der Verbindunganordnung nach Fig. 1a. Zur Vermeidung von Wiederholungen sollen nachfolgend nur die sich gegenüber der Verbindunganordnung nach Fig. 1a unterscheidenden Merkmale und Bauteile beschrieben werden. Gleiche Bauteile mit gleicher Funktion haben gleiche Bezugszeichen.

Die Verbindunganordnung nach dem vierten Ausführungsbeispiel weist ein nietartiges metallisches Bauteil 2', ein so genanntes Bighead 2', auf, welches ein kreisscheibenförmigen, rotationssymmetrischen Abschnitt 3' und einen stabförmigen Abschnitt 20 umfasst. Das Bighead 2' dient in dem Ausführungsbeispiel nach Fig. 3a, b der punktuellen Krafteinleitung einer an dem stabförmigen Abschnitt 20 angreifenden Kraft F in die flächige Struktur des Faserverbund-Bauteils 1. In einem Randbereich des kreisscheibenförmigen Abschnitts 3' sind acht runde Aussparungen bzw. Löcher 6 entlang einer kreisförmigen Mittellinie 21 und zueinander gleichmäßig beabstandet angeordnet, wie aus der Draufsicht nach Fig. 3a ersichtlich ist. Die Mittellinie 21 der Aussparungen 6 verläuft konzentrisch zur Längsachse 22 des stabförmigen Abschnitts 20 und zur deckungsgleichen Rotationsachse des kreisscheibenförmigen Abschnitts 3' des Bigheads 2'.

Die obere und die untere Teilschicht 4, 5 des Faserverbund-Bauteils 1 weist jeweils eine runde Öffnung mit einer umlaufenden Rand 23 auf. Im Überlappungsbereich 16 der oberen und unteren Teilschicht 4, 5 mit dem kreisscheibenförmigen Abschnitt 3' des metallischen Bauteils 2' weisen die Teilschichten 4, 5 jeweils acht zur Anordnung und Form der Löcher 6 korrespondierende Prägungen 7, 8 auf. Die Prägungen 7, 8 der oberen und unteren Teilschicht 4, 5 erstrecken sich jeweils in etwa gleich tief in die Löcher 6, so dass sie eine zueinander spiegelsymmetrische Prägeform P1 der Teilschichten 4, 5 in den Löchern 6 bilden (vgl. Fig. 3b). Die konzentrisch angeordneten und gleichmäßig beabstandeten, miteinander korrespondierenden Löcher 6 und Prägungen 7, 8 schaffen eine hochqualitative, formschlüssige Verbindung zwischen dem Faserverbund-Bauteil 1 und dem Bighead 2', die geeignet ist, die am Bighead 2' eingeleitete Kraft F auf das Faserverbund-Bauteil 1 zu übertragen.

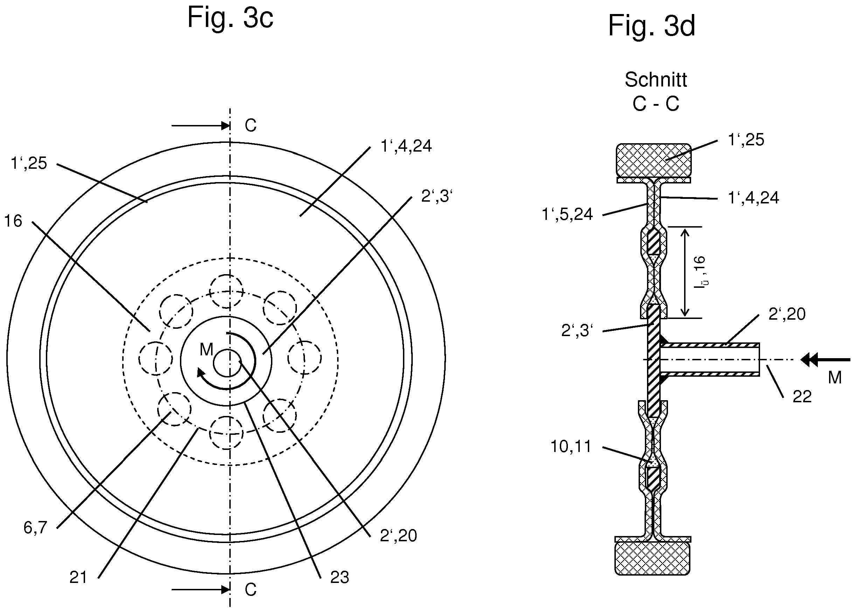

Die Draufsicht nach Fig. 3c und die Schnittansicht nach Fig. 3d zeigen in einer ähnlichen Ausführungsvariante zur Verbindungsanordnung nach Fig. 3a, 3b eine Verbindungsanordnung, bei der das Bighead 2' mit einem rotationssymmetrischen Faserverbund-Bauteil 1', wie z.B. einem Schwungrad 1', verbunden ist. Das rotationssymmetrische Faserverbund-Bauteil 1' umfasst einen kreisscheibenförmigen Abschnitt 24 mit einem am äußeren Umfang gebördelten Rand, welcher mit einer ringförmigen Faserverbund-Umwicklung 25 versehen ist, die die Schwungmasse bildet (s. Fig. 3d). Zur Bildung des gebördelten Randes enden die beiden Teilschichten 4, 5 am äußeren Umfang des kreisscheibenförmigen Abschnitts 24 rechtwinklig voneinander abgespreizt. Die ringförmige Faserverbund-Umwicklung 25 ist mit den beiden abgespreizten Enden der Teilschichten 4, 5 durch Verklebung verbunden.

Das analog der Verbindungsanordnung nach Fig. 3a in den kreisscheibenförmigen Abschnitt 24 des Faserverbund-Bauteil 1' eingebundene Bighead 2' ist in diesem Ausführungsbeispiel drehbar und dient der Einleitung eines am stabförmigen Abschnitt 20 des Bigheads 2' angreifenden Drehmoments M in das rotationssymmetrische Faserverbund-Bauteil 1'. Das rotationssymmetrische Faserverbund-Bauteil 1' überträgt das Drehmoment M in die Schwungmasse der ringförmigen Faserverbund-Umwicklung 25. Die erfindungsgemäße Verbindungsanordnung nach Fig. 3c, 3d stellt eine hochqualitative, formschlüssige Verbindung zwischen dem rotationssymmetrischen Faserverbund-Bauteil 1' und dem Bighead 2' bereit, die geeignet ist, das am Bighead 2' eingeleitete Drehmoment zu übertragen.

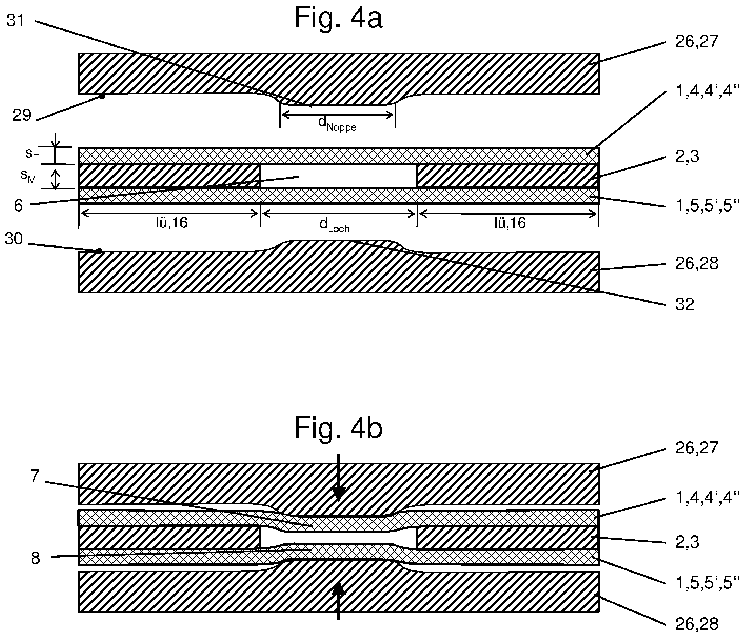

Die Fig. 4a bis 4d zeigen in vier Verfahrensphasen ein erfindungsgemäßes Verfahren zur Fertigung der Verbindungsanordnung eines Faserverbund-Bauteils 1 mit einem metallischen Bauteil 2 nach Fig. 1a. Das Verfahren basiert auf einem thermoplastischen Umformverfahren.

Fig. 4a stellt eine erste Fertigungsphase zur Fertigung der Verbindungsanordnung nach Fig. 1a dar. Hier ist ein Ausschnitt eines zweiteiligen Formwerkzeuges 26 mit einem oberen Teilwerkzeug 27 und einem unteren Teilwerkzeug 28 ersichtlich. Das zweiteilige Formwerkzeug 26 befindet sich im geöffneten Zustand. Zwischen dem oberen und dem unteren Teilwerkzeug 27, 28 ist eine vorbereitete Preform des Faserverbund-Bauteils 1 mit zwei Teilschichten 4, 5 platziert, zwischen denen ein vorbereiteter flächiger Abschnitt 3 des metallischen Bauteils 2 eingelegt ist.

Der flächige Abschnitt 3 des metallischen Bauteils 2, welches mit dem Faserverbund-Bauteil 1 zu verbinden ist, wurde zuvor mit einer kreisrunden Aussparung 6 mit einem Lochdurchmesser d_{Loch} versehen.

Bei diesem Ausführungsbeispiel werden als Ausgangsprodukte der Preform des Faserverbund-Bauteils 1 zwei Teilschichten 4, 5 aus sogenannten Organoblechen verwendet. Die Organobleche sind ebene Platten aus thermoplastischem Material (z.B. PP-Polypropylen, PA-Polyamid o.ä.), die mit einer Gewebeverstärkung (z.B. Kohlenstoff- oder Glasfasern) versehen sind. Diese Organobleche werden zunächst formbar gemacht. Dazu wird z.B. mittels Wärmestrahlung das enthaltene thermoplastische Matrixmaterial unter einem Infrarotfeld aufgeschmolzen und in den flüssigen oder hochviskosen Aggregatszustand überführt(nicht dargestellt).

Anschließend erfolgt die Positionierung des flächigen Abschnitts 3 des metallischen Bauteils 2 zwischen den beiden erwärmten Preform-Teilschichten 4, 5, so dass sich die Aussparung 6 des metallischen Bauteils 2 in einem Überlappungsbereich 16 der Teilschichten 4, 5 des Faserverbund-Bauteils 1 befindet und die beiden Teilschichten 4, 5 beidseitig eben an dem flächigen Abschnitt 3 anliegen.

Die so vorbereitete Anordnung aus Preform des Faserverbund-Bauteils 1 und flächigem Abschnitt 3 des metallischen Bauteils 2 wird nun zwischen den - vorzugsweise kalten - Teilwerkzeugen 27, 28 platziert.

Das obere und untere Teilwerkzeug 27, 28 des Formwerkzeuges 26 weisen jeweils eine formstabile Werkzeugfläche 29, 30 mit je einer gleichgroßen und gleichgeformten, aufeinander zu weisenden Noppe 31, 32 auf. Die Noppen 31, 32 sind korrespondierend zur Form der Aussparung 6 des metallischen Bauteils 2 und dementsprechend mit einem bestimmten Noppendurchmesser d_{Noppe} rund ausgebildet.

Zur Herstellung von Verbindungsanordnungen mit mehreren Aussparungen 6 im flächigen Abschnitt 3 des metallischen Bauteils 2 wird ein passendes Formwerkzeug (nicht dargestellt) mit entsprechend der Anzahl, Anordnung und Form der Aussparungen 6 korrespondierend ausgebildeten Noppen bereitgestellt.

Die vorbereitete Preform des Faserverbund-Bauteils 1 mit dem flächigen Abschnitt 3 des metallischen Bauteils 2 wird derart zwischen den Teilwerkzeugen 27, 28 positioniert, dass die Aussparung 6 zentrisch zu den Noppen 31, 32 angeordnet ist.

Beim Schließen des Formwerkzeuges 26 in der Fertigungsphase nach Fig. 4b, bei der sich die Teilwerkzeuge 27, 28 in Pfeilrichtung aufeinander zu bewegen, erfolgt das Umformen der weichen und formbaren Teilschichten 4, 5, wobei das Faserverbundmaterial an den flächigen Abschnitt 3 des metallischen Bauteils 2 angeformt und in die Aussparung 6 eingeformt wird. Hierbei werden mittels der beiden Noppen 31, 32 der Teilwerkzeuge 27, 28 in die Aussparung 6 passende Prägungen 7, 8 der Teilschichten 4, 5 erzeugt.

Die Form der Prägungen 7, 8 in den Teilschichten 4, 5 des Faserverbund-Bauteils 1 und damit die der Noppen 31, 32 der Teilwerkzeuge 27, 28 ist maßgeblich von der Schichtdicke S_{F} der Teilschichten 4, 5, der Dicke S_{M} des flächigen Abschnitts 3 des metallischen Bauteils 2 und von der Form und Größe des Loches 6 im metallischen Bauteil 2 abhängig. So sollte der Durchmesser der Noppe 31, 32 d_{Noppe} im Bezug zum Lochdurchmesser d_{Loch} vorzugsweise nicht größer sein als der Lochdurchmesser d_{Loch} abzüglich der zweifachen Schichtdicke S_{F} der Teilschichten 4, 5 (d_{Noppe} ≤ d_{Loch} - 2 x s_{F}). Dadurch werden Faserschädigungen im umgeformten Faserverbund-Bauteil 1 weitestgehend vermieden.

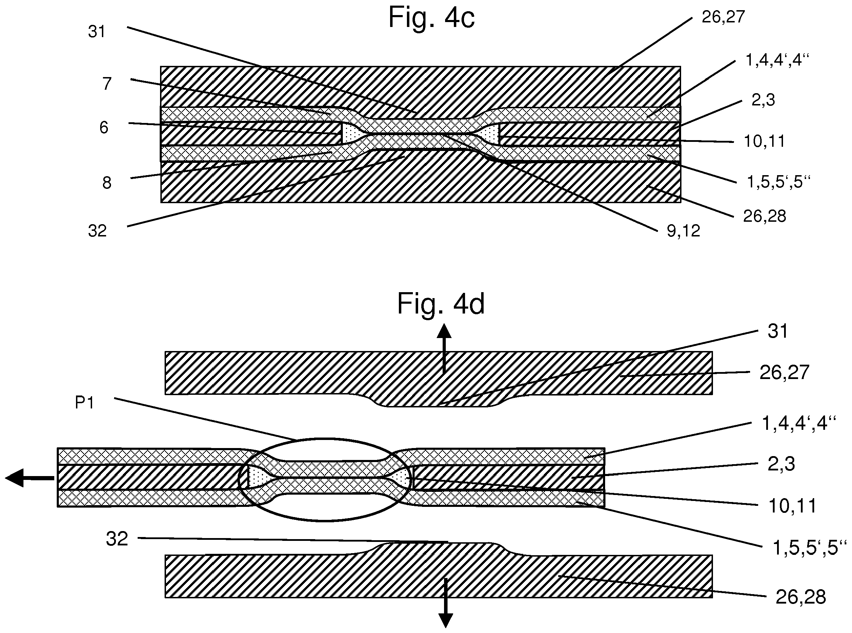

In der Fertigungsphase nach Fig. 4c ist das Formwerkzeug 26 vollständig geschlossen. Im Ergebnis des Umformprozesses ist in der Aussparung 6 ein Hinterschnitt der Teilschichten 4, 5 gebildet, der einen Formschluss mit dem metallischen Bauteil 2 erzeugt. Die gleichförmig und gleichtief ausgebildeten Prägungen 7, 8 der Teilschichten 4, 5 schaffen eine Verbindungsanordnung mit symmetrischer Prägeform P1.

Die beiden Prägungen 7, 8 der Teilschichten 4, 5 werden so tief geformt, dass sie sich berühren und eine Kontaktzone 9 bilden. Um diese Kontaktzone 9 der Prägungen 7, 8 der Teilschichten 4, 5 ausbilden zu können, ist es von Vorteil, wenn der Lochdurchmesser d_{Loch} der Aussparung 6 größer als die Dicke S_{M} des flächigen Abschnitts 3 des metallischen Bauteils 2 ausgeführt ist.

Der Noppendurchmesser d_{Noppe} und folglich der Lochdurchmesser d Loch der Aussparung 6 sollte außerdem so groß ausgebildet sein, dass eine ausreichend große Klebefläche 12 in der Kontaktzone 9 zwischen den Prägungen 7, 8 der oberen und der unteren Teilschicht 4, 5 zur Verfügung gestellt ist.

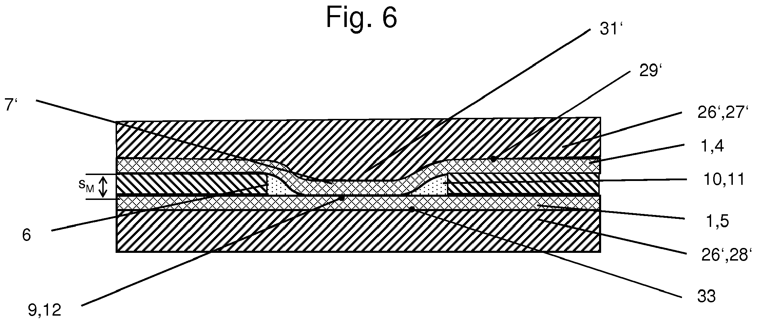

Alternativ zum Ausführungsbeispiel in Fig. 4a bis 4d kann ein Formwerkzeug 26' verwendet werden, bei denen ein Teilwerkzeug eine ebene Werkzeugfläche aufweist, die nicht zum Einformen einer Teilschicht vorgesehen ist. Eine solche Ausführungsvariante ist in Fig. 6 dargestellt. Das alternative Formwerkzeug 26' weist ein oberes Teilwerkzeug 27' mit einer formstabilen, genoppten Werkzeugfläche 29' und ein unteres Teilwerkzeug 28' mit einer formstabilen, ebenen Werkzeugfläche 33 auf. Fig. 6 zeigt das alternative Formwerkzeug 26' in einer der Fertigungsphase nach Fig. 4c entsprechenden Fertigungsphase, in der das Formwerkzeug 26' vollständig geschlossen ist. Die auf der Werkzeugfläche 29' des oberen Teilwerkzeuges 27' ausgebildete Noppe 31' hat eine solche Tiefe, dass die Tiefe der erzeugten Prägung 7' in der oberen Teilschicht 4 des Faserverbund-Bauteils 1 in etwa der Dicke S_{M} des flächigen Abschnitts 3 des metallischen Bauteils 2 entspricht. Die Prägung 7' der Teilschicht 4 berührt die eben verbliebene Teilschicht 5, mit der sie die Kontaktzone 9 mit der Klebefläche 12 bildet. Die nur einseitig ausgebildete Prägung 7' der oberen Teilschicht 4 schafft eine Verbindungsanordnung mit asymmetrischer Prägeform P2. Das alternative Formwerkzeug 26' ist damit geeignet zur Fertigung der Verbindungsanordnung eines Faserverbund-Bauteils 1 mit einem metallischen Bauteil 2 nach Fig. 1b.

Das alternative Verfahren hat den Vorteil, dass das Formwerkzeug 26' kostengünstiger ist. Das verwendete Teilwerkzeug 28' mit ebener Werkzeugfläche 33 ist mit weniger Aufwand zu fertigen und die Zuordnung der Teilwerkzeuge 27', 28' zueinander ist einfacher. Im Übrigen trifft das zu den Fig. 4a bis 4d beschrieben Verfahren auch auf ein Verfahren mit dem alternativen Formwerkzeug 26' nach Fig. 6 zu.

Aus Fig. 4c ist ersichtlich, dass zwischen den Teilschichten 4, 5 beim Umformen ein Überschuss an Matrixmaterial 11 angehäuft wird, so dass der sich bildende ringförmige Hohlraum 10 des Hinterschnitts zwischen den Teilschichten 4, 5 und der Aussparung 6 ausgefüllt wird.

Bereits während des Zufahrens der Teilwerkzeuge 27, 28 in der Fertigungsphase nach Fig. 4b oder nachdem die beiden Teilwerkzeuge 27, 28 die Endposition nach Fig. 4c erreicht haben, erfolgt das Abkühlen und Verfestigen (Konsolidieren) des Matrixmaterials 11 zwischen den Verstärkungsfasern und im Hohlraum 10. Das thermoplastische Matrixmaterial 11 wird in den festen Aggregatszustand überführt.

Vorzugsweise wird durch eine zusätzliche permanente Kühlung der beiden Teilwerkzeuge 27, 28 das Matrixmaterial 11 schneller abgekühlt, so dass die Konsolidierung beschleunigt stattfindet.

Nach dem Umform- und Konsolidierungsvorgang wird die Verbindungsanordnung so lange im Formwerkzeug 26 gehalten, bis sich die Teilschichten 4, 5 des Faserverbund-Bauteils 1 soweit abgekühlt haben, dass sich die verbundenen Bauteile 1, 2 schadlos und unter Beibehaltung der Form der Verbindungsanordnung aus den geöffneten Teilwerkzeugen 27, 28 entformen lassen. Diese Fertigungsphase ist in Fig. 4d dargestellt.

Das Verfahren kann mit geringem Aufwand durchgeführt werden und basiert auf der Verwendung einfacher Werkzeuge und weniger technischer Hilfsmittel. Es wird im Ergebnis dieses Verfahrens eine wirksame Form- und Stoffschlüssigkeit zwischen dem Faserverbund-Bauteil 1 und dem metallischen Bauteil 2 geschaffen und damit eine hochfeste Verbindung zwischen den Bauteilen 1, 2 erzielt.

Ein weiterer wesentlicher Vorteil des Verfahrens nach diesem Ausführungsbeispiel besteht darin, dass ausgewählte, zu fügenden Bereiche (Kontaktzone 9 zwischen den Teilschichten 4, 5 untereinander und Klebeflächen zwischen den Teilschichten 4, 5 und dem flächigen Abschnitt 3 des metallischen Bauteils 2) noch vor dem Umformen aufgeheizt und schon während des Umformens wieder abgekühlt werden können. Dadurch können besonders niedrige Taktzeiten bei der Herstellung der Verbindungsanordnung erzielt werden.

Das vorbeschrieben Verfahren nach Fig. 4a bis 4d kann durch verschiedene Verfahrensvarianten abgewandelt werden. Zur Vermeidung von Wiederholungen sollen bei der nachfolgenden Beschreibung der Verfahrensvarianten nur die sich gegenüber dem Verfahren nach Fig. 4a bis 4d unterscheidenden Merkmale und Bauteile erläutert werden. Gleiche Bauteile mit gleicher Funktion haben gleiche Bezugszeichen.

Bei einer ersten Verfahrensvariante werden unter Anwendung eines Infiltrationsverfahrens der flächige Abschnitt 3 des metallischen Bauteils 2 zwischen zwei trockene Gewebe-Teilschichten 4', 5' einer Preform des Faserverbund-Bauteils 1 angeordnet und die so vorbereitete Verbindungsanordnung sogleich zwischen den Teilwerkzeugen 27, 28 positioniert. Mit dem Zufahren der beiden Teilwerkzeuge 27, 28 entsprechend der Fig. 4a bis 4c erfolgt das Einformen der trockenen Gewebe-Teilschichten 4', 5' in die Aussparung 6. Zu diesem Zeitpunkt ist noch kein Matrixmaterial vorhanden. Dieses Matrixmaterial 11 wird nach Erreichen der Endposition der beiden Teilwerkzeuge 27, 28 (Fig. 4c) in die Gewebe-Teilschichten 4', 5' und die Hohlräume infiltriert. Dazu werden die Teilwerkzeuge 27, 28 zueinander druckdicht verschlossen und unter Erzeugung eines Vakuums ein duroplastisches 2-Komponenten-Gemisch in flüssiger Form zwischen die Teilwerkzeuge 27, 28 und in die Faserzwischenräume der Gewebe-Teilschichten 4', 5' und in den Hohlraum 10 gefördert. Danach erfolgt - wahlweise unter Zuführung von Wärme - eine chemische Reaktion des Matrixgemisches 11, wodurch es in den festen Aggregatszustand überführt wird und damit konsolidiert. Nachdem die Konsolidierung weitestgehend abgeschlossen ist, können die Teilwerkzeuge 27, 28 wieder geöffnet werden und die Entformung der verbunden Konstruktion erfolgen (siehe Fig. 4d).

Bei einer zweiten Verfahrensvariante werden unter Anwendung eines Prepreg-Verfahrens vorimprägnierte Gewebe-Teilschichten 4", 5" einer Preform des Faserverbund-Bauteils 1 verwendet. Diese beinhalten bereits ein Matrixmaterial 11, z.B. ein duroplastisches 2-Komponenten-Gemisch, welches tiefgefrorenen (bei ca. -18 °C) bereitgestellt wird und erst unter Zuführung von thermischer Energie formbar und konsolidierbar ist.

Nach der Anordnung des flächigen Abschnittes 3 des metallischen Bauteils 2 und der beiden vorimprägnierten Gewebe-Teilschichten 4", 5" zueinander erfolgt unmittelbar die Positionierung der Anordnung zwischen den beiden Teilwerkzeugen 27, 28 entsprechend Fig. 4a.

Bei einer für das duroplastische Matrixmaterial 11 günstigen Temperatur, wird dann das Faserverbundmaterial der vorimprägnierten Gewebe-Teilschichten 4", 5" formbar gemacht. Das geschieht wahlweise durch Temperierung der Gewebe-Teilschichten 4", 5" bei Raumtemperatur, durch Beheizung der Teilwerkzeuge 27, 28 oder mittels einer gesonderten, hier nicht dargestellten Heizungseinheit 37. Mittels beheizter Teilwerkzeuge 27, 28 wird die komplette Faserverbundstruktur der Teilschichten 4", 5" erwärmt, wobei die Formgebung der Teilschichten 4", 5" und die Erzeugung der Verbindung gleichzeitig erfolgt.

Das zuvor noch gefrorene duroplastische 2-Komponenten-Gemisch wird durch die Temperierung bzw. Erwärmung aufgeschmolzen. Unter Aufbringen des Druckes der zufahrenden Teilwerkzeuge 27, 28 erfolgt das Einformen der Gewebe-Teilschichten 4", 5" in die Aussparung 6. Die parallel einsetzende chemische Reaktion des Matrixmaterials 11 bewirkt eine Überführung vom flüssigen in den festen Aggregatszustand und damit das Konsolidieren des Matrixmaterials 11 . Zusätzlich können in dieser Fertigungsphase eines oder beide Teilwerkzeuge 27, 28 gekühlt werden. Nach erfolgter Konsolidierung kann die fertige Verbindungsanordnung entformt werden.

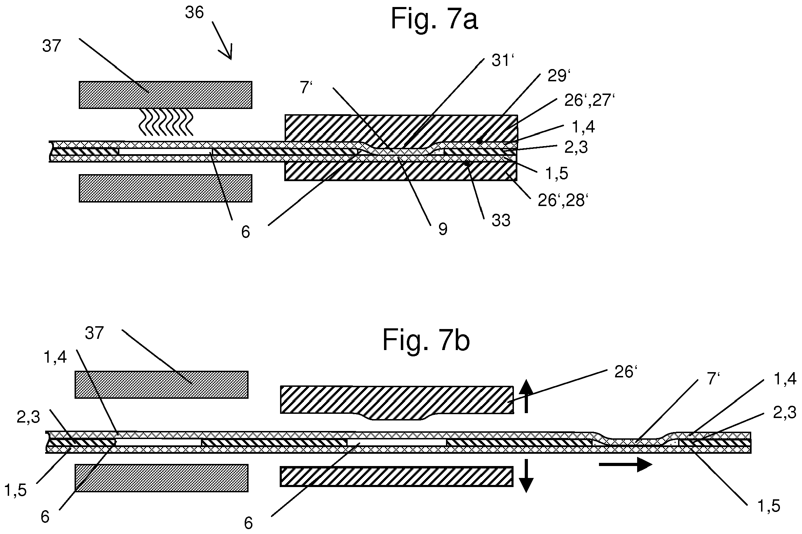

Die Heizungseinheit 37 für die Erwärmung der vorimprägnierten Gewebe-Teilschichten 4", 5" kann den Teilwerkzeugen 27, 28 vorgeschalten sein, so dass die zu formenden Bereiche der Gewebe-Teilschichten 4", 5" bereits vorgewärmt zwischen die Teilwerkzeuge 27, 28 eingebracht werden können. Eine nähere Beschreibung einer solchen Heizungseinheit 37 ist den Fig. 7a bis 7c zu entnehmen.

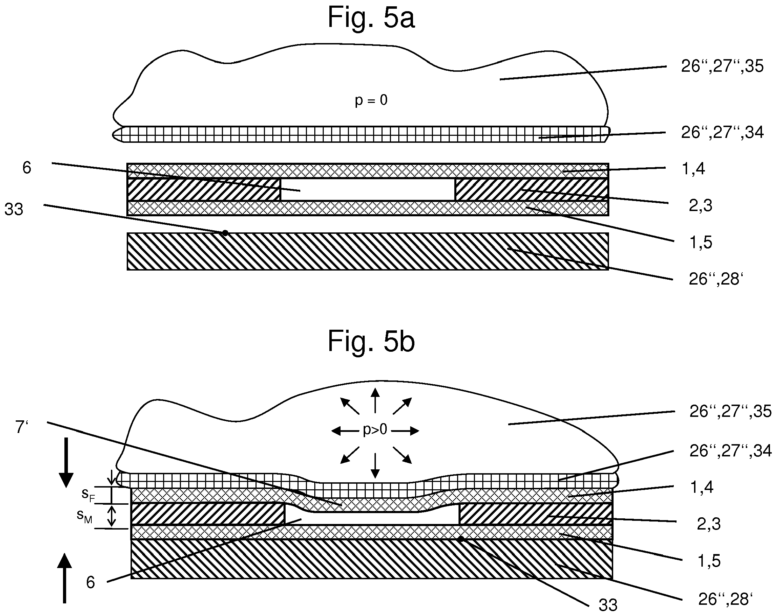

Die Fig. 5a bis 5d zeigen in vier Verfahrensphasen ein alternatives erfindungsgemäßes Verfahren zur Fertigung der Verbindungsanordnung eines Faserverbund-Bauteils 1 mit einem metallischen Bauteil 2 entsprechend Fig. 1b.

Zur Vermeidung von Wiederholungen sollen nachfolgend nur die sich gegenüber dem Verfahren nach Fig. 4a bis 4d unterscheidenden Merkmale und Bauteile beschrieben werden. Gleiche Bauteile mit gleicher Funktion haben gleiche Bezugszeichen.

Im Unterschied zum Verfahren nach Fig. 4a bis 4d wird ein Formwerkzeug 26" verwendet, das ein oberes Teilwerkzeug 27" mit einer formlabilen Werkzeugfläche 34 und das untere Teilwerkzeug 28' mit der formstabilen, ebenen Werkzeugfläche 33 nach Fig. 6 aufweist. Das obere Teilwerkzeug 27" umfasst eine flexible, druckfeste Folienschicht (Druckfolie) 34 als formlabile Werkzeugfläche 34 und einen auf die Druckfolie 34 einwirkenden, flexiblen Druckraum 35, ersichtlich aus Fig. 5a, die das Formwerkzeug 26" in geöffneter Stellung zeigt. Der Druckraum 35 kann, wie im Ausführungsbeispiel dargestellt, ein die Druckfolie 34 anpressendes Druckkissen 35 sein, in welchem ein Überdruck erzeugt wird.

Zwischen den Teilwerkzeugen 28', 27" wird die vorbereitete Anordnung aus der Preform des Faserverbund-Bauteils 1 mit zwei Teilschichten 4, 5 und dem zwischengelagerten flächigen Abschnitt 3 des metallischen Bauteils 2 platziert (Fig. 5a).

Zu Beginn des anschließenden Formungsprozesses nach Fig. 5b fahren die Teilwerkzeuge 28', 27" aufeinander zu, wobei sich das Druckkissen 35 infolge eines zur Umgebung eingestellten Druckunterschieds ausdehnt. Der Druckraum 35 wird im Ausführungsbeispiel durch einen erzeugten Überdruck gegenüber dem Umgebungsdruck des Formwerkzeugs 26" druckbeaufschlagt.

Unter der Druckbeaufschlagung legt sich die Druckfolie 34 an die obere Teilschicht 4 der vorbereiteten Preform des Faserverbund-Bauteils 1 mit flächigen Abschnitt 3 des metallischen Bauteils 2 an, während das untere Werkzeug 28' mit der formstabilen ebenen Werkzeugfläche 33 - an der unteren Teilschicht 5 anliegend - die Gegenkraft erzeugt. Durch die Druckbeaufschlagung der Druckfolie 34 wird das Faserverbundmaterial der oberen Teilschicht 4 an den flächigen Abschnitt 3 des metallischen Bauteils 2 angeformt und in das Loch 6 im flächigen Abschnitt 3 eingeformt, wobei eine Prägung 7' der oberen Teilschicht 4 in Abhängigkeit von Form und Größe des Loches 6 und in Abhängigkeit der Schichtdicke S_{F} der Teilschicht 4 und der Dicke S_{M} des flächigen Abschnitts 3 des metallischen Bauteils 2 entsteht.

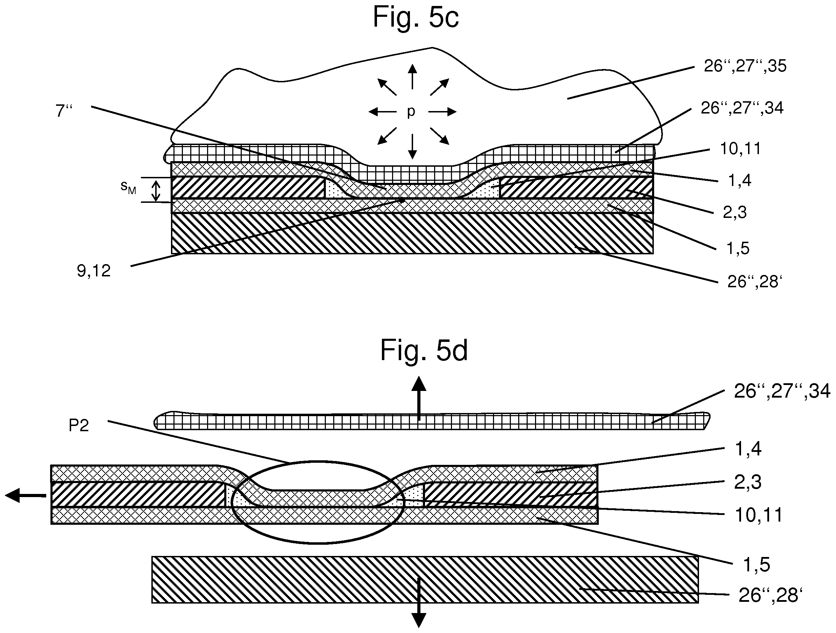

Fig. 5c zeigt das Formwerkzeug 26" in der Fertigungsphase, in der der Druck im Druckkissen 35 gesteigert wird, bis die erzeugte Prägung 7' in der oberen Teilschicht 4 ihre endgültige Form und Tiefe erreicht hat und eine Kontaktzone 9 zwischen den Teilschichten 4, 5 gebildet ist. Die Tiefe der Prägung 7' entspricht in etwa der Dicke S_{M} des flächigen Abschnitts 3 des metallischen Bauteils 2. Damit kontaktiert die Prägung 7' der Teilschicht 4 die eben verbliebene Teilschicht 5, mit der sie die Kontaktzone 9 mit der Klebefläche 12 bildet. Die nur einseitig ausgebildete Prägung 7' der oberen Teilschicht 4 schafft eine Verbindungsanordnung mit asymmetrischer Prägeform P2.

Nach erfolgter Konsolidierung des beteiligten Matrixmaterials 11 und dessen Überführung vom flüssigen in den festen Aggregatszustand kann der Druck im Druckkissen 35 gesenkt werden, bis das Druckkissen 35 drucklos ist. Anschließend können die Teilwerkzeuge 28', 27" aufgefahren, die Druckfolie 34 entfernt und die fertig gefügte Verbindungsanordnung entnommen werden (Fig. 5d).

Das Verfahren unter Verwendung von Teilwerkzeugen 27" mit formlabiler Werkzeugfläche 34 hat den Vorteil, dass sich das Druckkissen 35 immer der vorliegenden Form und Tiefe der Aussparung 6 anpasst. Somit müssen keine aufwändig gefrästen Formwerkzeuge, welche die jeweils passenden Noppen abbilden, für jeden Anwendungsfall bereitgestellt werden. Das reduziert die Kosten für die Fertigung der Formwerkzeuge erheblich.

In einer alternativen, nicht dargestellten Verfahrensvariante zum vorbeschrieben Verfahren nach Fig. 5a bis 5d wird der Druckraum 35 über der Druckfolie 34 mittels einer nicht dargestellten Temperatur-Druck-Kammer (Autoklaven) geschaffen. Das Formwerkzeug 26" und die zu verbindende Anordnung sind in dieser Verfahrensvariante in dem Autoklaven angeordnet. Das obere Teilwerkzeug 27" ist dabei so gestaltet, dass die formlabile Werkzeugfläche 34 (Druckfolie) den Druckraum 35 gegenüber der zu verbindenden Anordnung begrenzt.

Ist die vorbereitete Anordnung aus Preform des Faserverbund-Bauteils 1 und zwischengelagertem flächigen Abschnitt 3 des metallischen Bauteils 2 zwischen den Teilwerkzeugen 28', 27" platziert, wird die Druckfolie 34, die zu verbindende Anordnung umschließend, druckdicht mit dem unteren Teilwerkzeug 28' verbunden. Danach wird durch den Autoklaven ein allseitiger Druck auf die Druckfolie 34 und dem unteren Teilwerkzeug 28' erzeugt, wodurch das obere Teilwerkzeug 27" mit der Druckfolie 34 und das untere Teilwerkzeug 28' mit der ebenen Werkzeugfläche 33 gleichermaßen zusammengeführt werden und die zu verbindende Anordnung analog dem vorbeschriebenem Ausführungsbeispiel Fig. 5c verpresst wird.

Ist eine Temperierung der Teilschichten 4, 5 vorgesehen, kann parallel zur Druckerhöhung die Temperatur im Autoklaven und damit die Temperatur der Teilwerkzeuge 28', 27" erhöht werden.

Nach erfolgter Konsolidierung des beteiligten Matrixmaterials 11 können Druck und Temperatur im Autoklaven gesenkt werden, die Druckfolie 34 entfernt und die fertiggestellte Verbindungsanordnung entnommen werden.

Die Fig. 7a bis 7c zeigen in einer Schnittansicht einen Auszug aus einer Fertigungsanlage 36 zur kontinuierlich getakteten Inline-Fertigung einer Verbindungsanordnung nach Fig. 2a mit mehreren Prägungen 7' entsprechend der Verbindungsanordnung nach Fig. 1b.

Die Fertigungsanlage 36 weist eine Heizungseinheit 37 für die lokale Vorwärmung der Teilschichten 4, 5, vorzugsweise der Teilschicht 4 und ein der Heizungseinheit 37 nachgeschaltetes Formwerkzeug 26' auf, das nach Fig. 6 mit dem oberen Teilwerkzeug 27' mit formstabiler, genoppten Werkzeugfläche 29' und mit dem unteren Teilwerkzeug 28' mit formstabiler, ebener Werkzeugfläche 33 ausgestattet ist. Die Werkzeugfläche 29' des oberen Teilwerkzeuges 27' weist eine Noppe 31' zum Tiefziehen einer einseitigen Prägung 7' in die obere Teilschicht 4 auf. Das Formwerkzeug 26' der Fertigungsanlage 37 nach diesem Ausführungsbeispiel ist zur Schaffung einer Verbindungsanordnung mit asymmetrischer Prägeform P2, entsprechend der Verbindungsanordnung nach Fig. 1b, ausgebildet.

In der Fertigungsanlage 36 befinden der flächige Randbereich des metallischen Bauteil 2, der mehrere, in Linie und zueinander gleichmäßig beabstandet angeordnete Aussparungen 6, entsprechend der zu fügenden Verbindungsanordnung nach Fig. 2a, aufweist. Der Randbereich des metallischen Bauteils 2 ist im Überlappungsbereich 16 beidseitig von der oberen und der unteren Teilschicht 4, 5 des Faserverbund-Bauteils 1 abgedeckt. Das auf diese Weise vorbereitete metallische Bauteil 2 und Faserverbund-Bauteil 1 wird im kontinuierlichen Takt einer nicht dargestellten Transporteinrichtung entlang der Fertigungsanlage 36 verfahren, so dass der Überlappungsbereich 16 beider Bauteile 1 , 2 schrittweise die Heizungseinheit 37 und anschließend das Formwerkzeug 26' passiert.

Während nach Fig. 7a in dem vollständig geschlossenen Formwerkzeug 26' an einer ersten Fügestelle die erste Prägung 7' der Teilschicht 4 in der ersten Aussparung 6 erzeugt und die Teilschicht 4 mit der ebenen Teilschicht 5 in der Kontaktzone 9 verklebt wird, wird zugleich an einer nachfolgend angeordneten zweiten Fügestelle die Teilschicht 4 im zu formenden Bereich zur Erzeugung der zweiten Prägung 7' in der zweiten Aussparung 6 vorgewärmt.

Die Vorwärmung der Teilschicht 4 beschleunigt den nachfolgenden Umformprozess im Formwerkzeug 26'. Außerdem führt der Inline-Betrieb von Vorwärmung und Umformung der Teilschicht 4 zu einer wesentlichen Taktzeitminimierung im gesamten Verfahrensablauf der Herstellung der Verbindungsanordnung.

Vorzugsweise arbeitet die Heizungseinheit 37 mittels Ultraschall, Mikrowelle, Kontaktwärme oder Infrarotstrahlung, wodurch eine gerichtete, lokale Erwärmung des zu formenden Bereichs der Teilschicht 4 erfolgen kann. Damit erfolgt die Formbarmachung der Teilschicht 4 gezielt und sehr schnell, was zu einer energetischen Einsparung und weiterer Taktzeitminimierung im Verfahrensablauf führt.

Fig. 7b zeigt die Fertigungsanlage 36 nach Fig. 7a in einer zweiten Fertigungsphase, bei der die teilweise gefügte Verbindungsanordnung aus metallischem Bauteil 2 und Faserverbund-Bauteil 1 einen Takt der nicht dargestellten Transporteinrichtung weiterverfahren wurde, so dass die erste Fügestelle das Formwerkzeug 26' bereits passiert hat, die zweite Fügestelle dem Formwerkzeug 26' und die dritte Fügestelle der Heizungseinheit 37 zugeordnet ist.

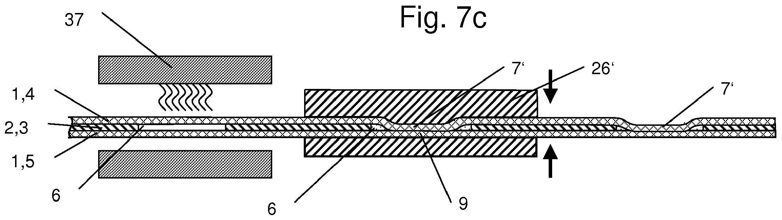

Fig. 7c zeigt die Verfahrensprozesse in der Fertigungsanlage 36 in diesem fortgeschrittenen Takt.

Mit Verlassen des Formwerkzeuges 26' kann die form- und stoffschlüssige Verbindung an der ersten Fügestelle abkühlen und vollständig aushärten, während in dem geschlossenen Formwerkzeug 26' an der zweiten Fügestelle eine weitere form- und stoffschlüssige Verbindung mit asymmetrischer Prägeform P2 geformt und verklebt wird. Parallel wird an der nachfolgenden dritten Fügestelle die Teilschicht 4 im zu formenden Bereich der dritten Aussparung 6 vorgewärmt.

Die Taktung mit den Verfahrensprozessen wiederholt sich quasikontinuierlich, bis alle Aussparungen 6 des längserstreckten flächigen Randbereich des metallischen Bauteil 2 auf vorstehend geschilderter Weise mit der Faserverbund-Bauteil 1 verbunden sind.

### Bezugszeichenliste

- 1: Faserverbund-Bauteil, Schwungrad
- 2: zweites Bauteil, metallisches Bauteil, Bighead
- 3: flächiger Abschnitt des zweiten Bauteils/kreisscheibenförmiger Abschnitt
- 4: obere Teilschicht des Faserverbund-Bauteils,.1, .2
- 5: untere Teilschicht des Faserverbund-Bauteils, .1, .2
- 6: Aussparung, Loch
- 7: Prägung der oberen Teilschicht
- 8: Prägung der unteren Teilschicht
- 9: Kontaktzone
- 10: ringförmiger Hohlraum
- 11: Füllmaterial
- 12: Klebefläche
- 13: Mittellinie der Aussparungen
- 14: Bauteilkante des metallischen Bauteils
- 15: Bauteilkante des Faserverbund-Bauteils
- 16: Überlappungsbereich
- 17: längserstreckter Hohlraum
- 18: flächiger Hohlraum
- 19: Zwischenschicht
- 20: stabförmiger Abschnitt des zweiten Bauteils
- 21: kreisförmigen Mittellinie
- 22: Längsachse des stabförmigen Abschnitts
- 23: umlaufender Rand der Öffnung des Faserverbund-Bauteils
- 24: kreisscheibenförmiger Abschnitt des Faserverbund-Bauteil
- 25: ringförmige Faserverbund-Umwicklung
- 26: Formwerkzeug
- 27: oberes Teilwerkzeug
- 28: unteres Teilwerkzeug
- 29: formstabile Werkzeugfläche des oberen Teilwerkzeugs
- 30: formstabile Werkzeugfläche des unteren Teilwerkzeugs
- 31: Noppe des oberen Teilwerkzeugs
- 32: Noppe des unteren Teilwerkzeugs
- 33: formstabile, ebene Werkzeugfläche
- 34: formlabile Werkzeugfläche, druckfeste Folienschicht, Druckfolie
- 35: Druckraum, Druckkissen
- 36: Fertigungsanlage
- 37: Heizungseinheit

- d_{Loch}: Lochdurchmesser der Aussparung
- S_{M}: Dicke des flächigen Abschnitts
- S_{F}: Schichtdicke der Teilschichten
- P1: symmetrische Prägeform
- P2: asymmetrische Prägeform
- l_{Ü}: Breite der Überlappung
- d_{Noppe}: Noppendurchmesser

## Patentansprüche

1. Verbindungsanordnung eines Faserverbund-Bauteils (1) mit einem zweiten Bauteil (2), wobei das zweite Bauteil (2) zumindest einen flächigen Abschnitt (3) mit einer oder mehreren den flächigen Abschnitt (3) durchdringenden Aussparung(en) (6) aufweist und der flächige Abschnitt (3) zwischen wenigstens zwei Teilschichten (4, 5) des Faserverbund-Bauteils (1) angeordnet ist, wobei zumindest eine der Teilschichten (4, 5) mit einer Schichtdicke S_{F} eine oder mehrere Prägung (en) (7, 8) mit im Wesentlichen gleichmäßiger Schichtdicke S_{F} aufweist, welche in die Aussparung(en) (6) eingeformt ausgebildet ist/sind.

2. Verbindungsanordnung nach Anspruch 1, **dadurch gekennzeichnet, dass** die Teilschichten (4, 5) im Bereich der Aussparung(en) (6) mittelbar oder unmittelbar, vorzugsweise stoffschlüssig, miteinander verbunden sind.

3. Verbindungsanordnung nach Anspruch 1 oder 2, **dadurch gekennzeichnet, dass** wenigstens eine Teilschicht (4, 5) mittelbar oder unmittelbar, vorzugsweise stoffschlüssig, mit dem flächigen Abschnitt (3) des zweiten Bauteils (2) verbunden ist.

4. Verbindungsanordnung nach einem der vorhergehenden Ansprüche, **dadurch gekennzeichnet, dass** die Aussparung(en) (6) einen runden Querschnitt aufweist/aufweisen.

5. Verbindungsanordnung nach einem der vorhergehenden Ansprüche, **dadurch gekennzeichnet, dass** die in die Aussparung(en) (6) eingeformt ausgebildete Teilschicht (4, 5) eine oder mehrere zur Anzahl und Form der Aussparung(en) korrespondierend ausgebildete Prägung(en)(7) aufweist/aufweisen.

6. Verbindungsanordnung nach einem der Ansprüche 1 bis 5, **dadurch gekennzeichnet, dass** eine obere und eine untere Teilschicht (4, 5) gleichartig in die Aussparung(en)(6) eingeformt ausgebildet sind, so dass die Prägungen (7) der Teilschichten (4, 5) spiegelsymmetrisch ausgebildet und angeordnet sind.

7. Verbindungsanordnung nach einem der Ansprüche 1 bis 5, **dadurch gekennzeichnet, dass** eine obere und eine untere Teilschicht (4, 5) ungleichartig in die Aussparung(en)(6) eingeformt ausgebildet sind, so dass die Prägungen (7) der Teilschichten (4, 5) asymmetrisch ausgebildet und angeordnet sind.

8. Verbindungsanordnung nach einem der Ansprüche 1 bis 7, **dadurch gekennzeichnet, dass** die obere und die untere Teilschicht (4, 5) eine voneinander verschiedene Formbarkeit aufweisen.

9. Verfahren zur Herstellung einer Verbindungsanordnung nach Anspruch 1 bis 8, wobei
- der flächige Abschnitt (3) des zweiten Bauteils (2) zwischen wenigstens zwei Teilschichten (4, 5) einer Preform des Faserverbund-Bauteils (1) positioniert wird, so dass
- die Teilschichten (4, 5) an dem flächigen Abschnitt (3) des zweiten Bauteils (2) anliegen,
- wobei wenigstens eine Teilschicht (4, 5) eine oder mehrere den flächigen Abschnitt (3) des zweiten Bauteils (3) durchdringende Aussparung(en) (6) abdeckt und flächig überlappt,
- anschließend wenigstens in einer Teilschicht (4, 5) mit einer Schichtdicke S_{F} mittels eines Formwerkzeuges (26) eine oder mehrere Prägung (en) (7, 8) mit im Wesentlichen gleichmäßiger Schichtdicke S_{F} ausgebildet wird/werden, die in die Aussparung(en) (6) eingeformt wird/werden, so dass sich die Preform des Faserverbund-Bauteils (1) mit dem zweiten Bauteil (2) formschlüssig verbindet, und
- vor oder nach der Entformung der gefügten Verbindungsanordnung die Preform des Faserverbund-Bauteils (1) konsolidiert wird.

10. Verfahren nach Anspruch 9, **dadurch gekennzeichnet, dass** die Teilschicht (4, 5) vor dem Einformen oder während des Einformens in die Aussparung(en) (6) thermisch behandelt wird.

11. Verfahren nach Anspruch 9 oder 10, **dadurch gekennzeichnet, dass** das Formwerkzeug (26) zwei sich gegenüberliegend angeordnete Teilwerkzeuge (27, 28) aufweist, wobei mindestens ein Teilwerkzeug (27, 28) mit einer Werkzeugfläche (29, 30, 34) zum Einformen einer oder mehrerer Teilschichten (4, 5) in die Aussparung(en)(6)ausgebildet ist.

12. Verfahren nach Anspruch 11, **dadurch gekennzeichnet, dass** die Werkzeugflächen (29, 30) des oberen Teilwerkzeug (27) und des unteren Teilwerkzeugs (28) eine übereinstimmende Kontur zum Einformen der Teilschicht(en) (4, 5) aufweisen.

13. Verfahren nach Anspruch 11, **dadurch gekennzeichnet, dass** ein Teilwerkzeug (28) mit einer ebenen Werkzeugfläche (33) ausgebildet ist.

14. Verfahren nach einem der Ansprüche 11 bis 13, **dadurch gekennzeichnet, dass** die Werkzeugfläche (29, 30) zum Einformen der Teilschicht(en) (4, 5) zumindest eine zur Anzahl und Form der Aussparung(en) (6) korrespondierend ausgebildete Noppe(n) (31, 32) aufweist/aufweisen.

15. Verfahren nach einem der Ansprüche 11 bis 14, **dadurch gekennzeichnet, dass** die Werkzeugfläche (34) zum Einformen der Teilschicht(en) (4, 5) formlabil ausgebildet ist.

## Claims

1. Connection arrangement of a fibre composite component (1) with a second component (2), whereby the second component (2) has at least one flat section (3) with one or more recess(es) penetrating the flat section (3) and the flat section (3) is arranged between at least two sublayers (4, 5) of the fibre composite component (1), whereby at least one of the sublayers (4, 5) with a layer thickness S_{F} has one or more imprint(s)¹ (7, 8) with an essentially uniform layer thickness S_{F}, which is/are designed moulded into the recess(es) (6).

2. Connection arrangement in accordance with Claim 1, **characterised in that** the sublayers (4, 5) are connected to each other in the area of the recess(es) (6) indirectly or directly, preferably by means of a substance-to-substance bond.

3. Connection arrangement in accordance with Claim 1 or 2, **characterised in that** at least one sublayer (4, 5) is connected indirectly or directly, preferably by means of a substance-to-substance bond, to the flat section (3) of the second component (2).

4. Connection arrangement in accordance with one of the preceding Claims, **characterised in that** the recess(es) (6) has/have a round cross section.

5. Connection arrangement in accordance with one of the preceding Claims, **characterised in that** the sublayer (4, 5) designed moulded into the recess(es) has/have² one or more imprint(s) (7) corresponding to the number and shape of the recess(es).

6. Connection arrangement in accordance with one of Claims 1 to 5, **characterised in that** an upper and a lower sublayer (4, 5) are designed moulded into the recess(es) (6) in the same way, so that the imprints (7) of the sublayers (4, 5) are designed and arranged so as to have mirror symmetry.

7. Connection arrangement in accordance with one of Claims 1 to 5, **characterised in that** an upper and a lower sublayer (4, 5) are designed moulded into the recess(es) (6) in different ways, so that the imprints (7) of the sublayers (4, 5) are designed and arranged asymmetrically.

8. Connection arrangement in accordance with one of Claims 1 to 7, **characterised in that** the upper and the lower sublayer (4, 5) have malleabilities that differ from each other.

9. Method for producing a connection arrangement in accordance with Claim 1 to 8, whereby
- the flat section (3) of the second component (2) is positioned between at least two sublayers (4, 5) of a preform of the fibre composite component (1), so that
- the sublayers (4, 5) are in contact with the flat section (3) of the second component (2),
- whereby at least one sublayer (4, 5) covers and overlaps 2-dimensionally with one or more recess(es) penetrating the flat section (3) of the second component (3³),
- subsequently, in at least one sublayer (4, 5) with a layer thickness S_{F}, one or more imprint(s) (7, 8) with an essentially uniform layer thickness S_{F} is/are constructed with the aid of a moulding tool (26); this/these is/are moulded into the recess(es) (6) so that the preform of the fibre composite component (1) connects to the second component (2) in a form-fit manner, and
- before or after the demoulding of the joined connection arrangement, the preform of the fibre composite component (1) is consolidated.

10. Method in accordance with Claim 9, **characterised in that** the sublayer (4, 5) is thermally treated before or during the moulding-in into the recess(es) (6).

11. Method in accordance with Claim 9 or 10, **characterised in that** the moulding tool (26) has two tool parts arranged opposite each other (27, 28), whereby at least one tool part (27, 28) is designed with a tool surface (29, 30, 34) for moulding one or more sublayers (4, 5) into the recess(es) (6).

12. Method in accordance with Claim 11, **characterised in that** the tool surfaces (29, 30) of the upper tool part (27) and the lower tool part (28) have a matching contour for the moulding-in of the sublayers (4, 5).

13. Method in accordance with Claim 11, **characterised in that** one tool part (28) is designed with a flat tool surface (33).

14. Method in accordance with one of Claims 11 to 13, **characterised in that** the tool surface (29, 30) for the moulding-in of the sublayer(s) (4, 5) has/have⁴ at least one nub(s) designed to correspond to the number and shape of the recess(es) (6).

15. Method in accordance with one of Claims 11 to 14, **characterised in that** the tool surface (34) for the moulding-in of the sublayer(s) (4, 5) is designed to be non-rigid.

## Revendications

1. Dispositif d'assemblage d'un composant en matériau composite renforcé de fibres (1) avec un second composant (2), dans lequel le second composant (2) comprend au moins un tronçon plat (3), un ou plusieurs de ces tronçons plats (3) étant traversé(s) d'un ou plusieurs évidement(s) (6) et le tronçon plat (3) étant disposé entre au moins deux couches partielles (4, 5) du composant en matériau composite renforcé de fibres (1), au moins une des couches partielles (4, 5) d'une épaisseur de couche S_{F} présente un ou plusieurs emboutissage(s) (7, 8) ayant pour l'essentiel une épaisseur de couche S_{F} constante et étant formé(s) par moulage dans le ou les évidement(s) (6).

2. Dispositif d'assemblage selon la revendication 1, **caractérisé en ce que** les couches partielles (4, 5) dans la zone du/des évidement(s) (6) sont en liaison directe ou indirecte l'une avec l'autre, de préférence par adhérence des matériaux.

3. Dispositif d'assemblage selon l'une quelconque des revendications 1 ou 2, **caractérisé en ce que** au moins une des couches partielles (4, 5) est en liaison directe ou indirecte, de préférence avec adhérence des matériaux, avec la section plate (3) du second composant (2).

4. Dispositif d'assemblage selon l'une quelconque des revendications précédentes, **caractérisé en ce que** le ou les évidement(s) (6) présente(nt) une section transversale ronde.

5. Dispositif d'assemblage selon l'une quelconque des revendications précédentes, **caractérisé en ce que** la couche partielle (4, 5) moulée dans le ou les évidement(s) (6) présente un ou plusieurs emboutissage(s) (7) correspondant au nombre et à la forme du ou des évidement(s) (6).

6. Dispositif d'assemblage selon l'une quelconque des revendications 1 à 5, **caractérisé en ce qu'**une couche partielle (4, 5) supérieure et inférieure se forme également par moulage dans le ou les évidement(s) (6), de sorte que les emboutissages (7) des couches partielles (4, 5) se forment et sont disposés de façon symétrique.

7. Dispositif d'assemblage selon l'une quelconque des revendications 1 à 5, **caractérisé en ce qu'**une couche partielle supérieure et inférieure (4, 5) se forme de façon hétérogène par moulage dans le ou les évidement(s) (6), de sorte que les emboutissages (7) des couches partielles (4, 5) se forment et sont disposés de façon asymétrique.

8. Dispositif d'assemblage selon l'une quelconque des revendications 1 à 7, **caractérisé en ce que** les couches partielles supérieure et inférieure (4, 5) présentent chacune une malléabilité différente.

9. Procédé de fabrication d'un dispositif d'assemblage selon l'une quelconque des revendications 1 à 8, dans lequel
- le tronçon plat (3) du second composant (2) est positionné entre au moins deux couches partielles (4, 5) d'un prémoulage du composant en composite renforcé de fibres (1), de sorte que
- les couches partielles (4, 5) sont placées contre le tronçon plat (3) du second composant (2),
- au moins une couche partielle (4, 5) comble et recouvre de façon plane le ou les évidement(s) (6) traversant le tronçon plat (3) du second composant (2),
- ensuite, un ou plusieurs emboutissages (7, 8) sont formés dans au moins une couche partielle (4, 5) d'épaisseur S_{F} au moyen d'une matrice (26), avec une épaisseur de couche essentiellement régulière S_{F}, et est/sont moulé(s) dans le ou les évidement(s) (6), de sorte que le prémoulage du composant en composite renforcé de fibres (1) s'encastre avec le second composant (2), et
- qu'avant ou après le démoulage du dispositif d'assemblage joint, le prémoulage du composant en composite renforcé de fibres (1) est consolidé.

10. Procédé selon la revendication 9, **caractérisé en ce que** la couche partielle (4, 5) est traitée thermiquement avant ou pendant le moulage dans le ou les évidement(s) (6).

11. Procédé selon l'une quelconque des revendications 9 ou 10, **caractérisé en ce que** la matrice (26) comprend deux parties d'outil (27, 28) disposées face à face, au moins une de ces parties (27, 28) étant constituée d'une surface d'outil (29, 30, 34) pour le moulage d'une ou plusieurs couche(s) partielle(s) (4, 5) dans le ou les évidements (6).

12. Procédé selon la revendication 11, **caractérisé en ce que** les surfaces d'outil (29, 30) de la partie d'outil supérieure (27) et de la partie d'outil inférieure (28) ont un contour concordant pour le moulage de la ou des couche(s) partielle(s) (4, 5).

13. Procédé selon la revendication 11, **caractérisé en ce qu'**une partie d'outil (28) est constituée d'une surface d'outil (33) plane.

14. Procédé selon l'une quelconque des revendications 11 à 13, **caractérisé en ce que** la ou les surface(s) d'outil (29, 30) de formage de la ou des couche(s) partielle(s) (4, 5) comprend/comprennent au moins une protubérance (31, 32) correspondant au nombre et à la forme du/des évidement(s) (6).

15. Procédé selon l'une quelconque des revendications 11 à 14, **caractérisé en ce que** la surface d'outil (34) de moulage de la ou des couche(s) partielle(s) (4, 5) est souple.
